# EUROPÄISCHE PATENTANMELDUNG

(11) **EP 4 706 899 A1**
(43) Veröffentlichungstag der Anmeldung: **11.03.2026**
(21) Anmeldenummer: 24198372.5
(22) Anmeldetag: 04.09.2024
(51) Int. Cl.: B25J 9/16

(54) **VERFAHREN ZUM UMORIENTIEREN EINES VON EINEM ROBOTERARM MITTELS EINES GREIFERS HANDZUHABENDEN OBJEKTS, ZUGEHÖRIGE UMORIENTIERUNGSVORRICHTUNG UND COMPUTERPROGRAMMPRODUKT**

(71) Anmelder: Swisslog AG, 5033 Buchs/Aarau (CH)
(72) Erfinder: WEBER, Jörg, 44359 Dortmund (DE)
(74) Vertreter: Böss, Dieter Alexander

(57) **Zusammenfassung**

Die Erfindung betrifft ein Verfahren zum Umorientieren eines von einem Roboterarm (2) mittels eines Greifers (3) handzuhabenden Objekts (1), unter anderem aufweisend die Schritte des selbsttätiges Umorientierens des an einer instabilen Ablegestelle (7) einer Umorientierungsvorrichtung (5) abgesetzten Objekts (1), indem das vom Greifer (3) freigegebene Objekt (1) aufgrund Schwerkrafteinflusses seine momentane erste Orientierung an der instabilen Ablegestelle (6) selbsttätig ändert, bis das Objekt (1) an einer Anschlagstelle (7) der Umorientierungsvorrichtung (5) anstößt und dort einen stabilen Lagezustand einnimmt, in dem sich das Objekt (1) in einer von der ersten Orientierung verschiedenen zweiten Orientierung befindet, und des automatischen Aufnehmens des Objektes (1) aus seinem stabilen Lagezustand an der Anschlagstelle (7) mittels des von dem Roboterarm (2) geführten Greifers (3) oder eines von einem anderen Roboterarm geführten anderen Greifer, indem der Greifer (3) das Objekt (1) in einer von der ersten Greifpose verschiedenen zweiten Greifpose automatisch aufnimmt. Die Erfindung betrifft außerdem eine zugehörige Umorientierungsvorrichtung (5) und ein entsprechendes Computerprogrammprodukt.

## Beschreibung

Die Erfindung betrifft ein Verfahren zum Umorientieren eines von einem Roboterarm mittels eines Greifers handzuhabenden Objekts, eine zugehörige Umorientierungsvorrichtung und ein entsprechendes Computerprogrammprodukt.

Die DE 10 2021 104 773 A1 beschreibt einen KommissionierRoboter mit einem Sauggreifer zum Greifen eines Artikels, mit wenigstens einer 3D-Kamera zum Erfassen eines Zielbehälters und einer Steuerung zum Bestimmen einer Trajektorie des Sauggreifers zum Aufnehmen eines Artikels aus einem Quellbehälter und zum Ablegen des Artikels in dem Zielbehälter. Die Steuerung ist dabei ausgelegt, aus den Daten der 3D-Kamera mit Hilfe einer Bildverarbeitungssoftware einen Ablageplatz des Artikels im Zielbehälter und wenigstens eine Begrenzungswand im Zielbehälter zu bestimmen und die Trajektorie so zu bestimmen, dass sich der Artikel in einem Absenkabschnitt nach vertikal unten bewegt, so dass der Artikel im Absenkabschnitt horizontal um einen Absenkabstand gegenüber dem Ablageplatz versetzt ist, und in einem Endabschnitt der Trajektorie, welcher dem Absenkabschnitt nachfolgt, an die Begrenzungswand annähert oder das der Artikel in einem Beruhigungsabschnitt der Trajektorie die Begrenzungswand berührt.

Aufgabe der Erfindung ist es, ein Verfahren zum Umorientieren eines von einem Roboterarm mittels eines Greifers handzuhabenden Objekts zu schaffen, durch das ein Objekt auf einfache und zuverlässige Weise in einer geänderten Greifpose von einem Greifer eines Roboterarms automatisch gefasst werden kann. Eine weitere Aufgabe besteht darin, eine Umorientierungsvorrichtung zu schaffen, mit der ein entsprechendes Verfahren durchgeführt werden kann.

Die Aufgabe wird gelöst durch ein Verfahren zum Umorientieren eines von einem Roboterarm mittels eines Greifers handzuhabenden Objekts, aufweisend die Schritte:
- automatisches Aufnehmen eines Objektes mittels eines von einem Roboterarm geführten Greifers, indem der Greifer das Objekt in einer ersten Greifpose automatisch aufnimmt,
- automatisches Bewegen des Objektes durch automatisches Verstellen von Gelenken des Roboterarms, welcher den Greifer führt, an eine Umorientierungsvorrichtung, welche eine instabile Ablegestelle aufweist, an der das Objekt in einem instabilen Lagezustand abgesetzt werden kann,
- Absetzen des Objektes an der instabilen Ablegestelle der Umorientierungsvorrichtung durch automatisches Freigeben des vom Roboterarm geführten Objekts von dem Greifer,
- selbsttätiges Umorientieren des an der instabilen Ablegestelle der Umorientierungsvorrichtung abgesetzten Objekts, indem das vom Greifer freigegebene Objekt aufgrund Schwerkrafteinflusses seine momentane erste Orientierung an der instabilen Ablegestelle selbsttätig ändert, bis das Objekt an einer Anschlagstelle der Umorientierungsvorrichtung anstößt und dort einen stabilen Lagezustand einnimmt, in dem sich das Objekt in einer von der ersten Orientierung verschiedenen zweiten Orientierung befindet,
- automatisches Aufnehmen des Objektes aus seinem stabilen Lagezustand an der Anschlagstelle mittels des von dem Roboterarm geführten Greifers oder eines von einem anderen Roboterarm geführten anderen Greifer, indem der Greifer das Objekt in einer von der ersten Greifpose verschiedenen zweiten Greifpose automatisch aufnimmt.

Bei automatisierten Handhabungsvorgängen, die durch einen Roboter selbständig durchgeführt werden sollen, kann sich das Problem ergeben, dass ein Objekt von einem Greifer, der von einem Roboterarm des Roboters geführt wird, in einer bestimmten Greifpose gefasst ist, die für die weitere Handhabung ungünstig ist oder die weitere Handhabung sogar ganz verhindern kann. Dies kann beispielsweise der Fall sein, wenn im Rahmen einer automatisierten Montageaufgabe ein bestimmtes Bauteil aus einer bereitgestellten Kiste automatisch durch den Roboterarm entnommen werden soll und dieses Bauteil mittels des Roboters an eine andere Baugruppe automatisch montiert werden soll. Hierbei wird es im Allgemeinen erforderlich sein, das Bauteil in einer bestimmten Ausrichtung, d.h. in einer bestimmten räumlichen Lage an die Baugruppe anzufügen. Soll das Bauteil beispielsweise im Inneren der Baugruppe montiert werden, so kann der bestehende Arbeitsraum innerhalb dem der Roboterarm mit seinem Greifer und dem gefassten Bauteil bewegt werden kann, stark reduziert sein. Gegebenenfalls kann das vom Greifer des Roboterarms gefasste Bauteil in seiner momentanen Orientierung relativ zum Greifer, d.h. in seiner momentanen Greifpose, nicht an die vorgesehen Stelle an der Baugruppe bewegt werden. In einem solchen Fall ist ein Umgreifen das Objekts, d.h. ein Umgreifen des Bauteils erforderlich.

Im Anwendungsbereich des Kommissionierens kann ein automatisierter Handhabungsvorgang von einem automatisch mittels Roboter geführten Kommissioniergreifer durchgeführt werden. Um beispielsweise eine hohe Packdichte bei der Kommissionierung unterschiedlicher Artikel in einen Zielbehälter zu erreichen, ist eine Umorientierung von Artikeln sinnvoll, insbesondere dann, wenn wie im Regelfall die Artikel dem Roboter nicht ausgerichtet angedient werden.

Bekannt ist es, für ein Umorientieren eines Objekts, wie eines Bauteils oder eines Werkstücks, einen vom Roboterarm separaten Positionierer vorzusehen, an dem das Objekt abgelegt werden kann. Der Positionierer ist dabei eine aktive Verstellvorrichtung, welche über zumindest eine aktive Bewegungsachse verfügt. So kann in einem einfachen Falle der Positionierer ein Drehtisch sein, der eine horizontal ausgerichtete Abstellfläche aufweist, die über einen motorischen Antrieb um eine vertikale Drehachse gedreht werden kann. Ein Objekt kann demgemäß durch einen Roboterarm automatisch auf dem Drehtisch abgelegt werden, der Drehtisch dreht das abgelegte Objekt in eine gewünschte neue Orientierung und der Roboterarm kann das umorientierte Objekt anschließend erneut durch den Greifer fassen und aufnehmen, und zwar in einer geänderten neuen Greifpose. Nachteilig ist hierbei jedoch, dass der Positionierer sehr aufwändig und teuer ist, und auch das notwendige aktive Bewegen des Antriebs des Positionierers aufwändig und umständlich ist. Darüber hinaus ist ein solches System anfällig für Störungen, vor allem, weil der Positionierer aus einer großen Anzahl von bewegten Teilen aufgebaut ist.

Das erfindungsgemäße Verfahren hat den Vorteil, dass zum Umorientieren des Objekts keine aufwändigen und insbesondere keine aktiv angetriebenen Positionierer erforderlich sind, um ein Objekt aus einer ersten Greifpose an einem Greifer eines Roboterarms in eine von der ersten Greifpose verschiedene, andere zweite Greifpose zu bringen.

Das automatische Aufnehmen des Objektes mittels eines von einem Roboterarm geführten Greifers, indem der Greifer das Objekt in einer ersten Greifpose automatisch aufnimmt, kann beispielsweise erfolgen, indem der Roboterarm mittels seines Greifers ein Objekt aus einer Kiste automatisch entnimmt. Die Objekte können in der Kiste geordneten oder in ungeordneten Zuständen vorhanden sein. In einem solchen Fall kann beispielsweise mittels wenigstens eines optischen Sensors und auf Basis einer Bildauswertung die Lage des zu greifenden Objekts in der Kiste automatisch erfasst und der Greifer des Roboterarms derart auf Grundlage der erfassten Lage des Objekts angesteuert werden, so dass der Greifer das Objekt in einer ersten Greifpose aufnehmen kann. Die jeweilige Greifpose ist definiert durch die relative Position und Orientierung des Objekts bezüglich des Greifers, wenn der Greifer das Objekt gefasst hat.

Für die erste Greifpose muss dabei sichergestellt sein, dass der Greifer in passender Weise relativ zum Objekt positioniert werden kann. Die erste Greifpose für das Fassen des Objekts durch den Greifer kann beispielsweise dadurch eingeschränkt sein, dass das Objekt sehr wandnah oder unmittelbar an einer Innenwand der Kiste anliegend sich in der Kiste befindet. Der Roboterarm kann demgemäß nur von oben in die Kiste hineingeführt werden und der Greifer nur von einem zentralen Bereich in der Kiste in Richtung der Innenwand greifen.

Somit kann es sein, dass das Objekt aus der Kiste in einer ersten Greifpose entnommen werden muss, um überhaupt entnommen werden zu können, die erste Greifpose jedoch nicht dazu geeignet ist, das aufgenommene Objekt am Zielort in der dort gewünschten Lage ablegen oder anbringen zu können.

Gemäß dem erfindungsgemäßen Verfahren ist deshalb vorgesehen, nachdem der Greifer das Objekt in der ersten Greifpose gefasst hat, das Objekt durch automatisches Verstellen von Gelenken des Roboterarms, welcher den Greifer führt, automatisch an eine Umorientierungsvorrichtung zu bewegen, welche eine instabile Ablegestelle aufweist, an der das Objekt in einem instabilen Lagezustand abgesetzt werden kann.

Das Absetzen erfolgt, indem der Greifer das Objekt an der instabilen Ablegestelle der Umorientierungsvorrichtung automatisch freigibt, d.h. der Greifer das Objekt loslässt.

Die Umorientierungsvorrichtung ist erfindungsgemäß derart ausgebildet, dass ein selbsttätiges Umorientieren des an der instabilen Ablegestelle der Umorientierungsvorrichtung abgesetzten Objekts stattfinden kann, indem das vom Greifer freigegebene Objekt aufgrund Schwerkrafteinflusses seine momentane erste Orientierung an der instabilen Ablegestelle selbsttätig ändert, bis das Objekt an einer Anschlagstelle der Umorientierungsvorrichtung anstößt und dort einen stabilen Lagezustand einnimmt, in dem sich das Objekt in einer von der ersten Orientierung verschiedenen zweiten Orientierung befindet.

Wenn der Greifer das Objekt in der ersten Greifpose an die Umorientierungsvorrichtung geführt hat, befindet sich das Objekt relativ zur Umorientierungsvorrichtung, insbesondere relativ zur instabilen Ablegestelle in seiner ersten Orientierung. Unter einer instabilen Ablegestelle wird eine Stelle verstanden, an der das Objekt zwar abgestellt werden kann, jedoch nur in einem solchen instabilen Zustand des Objekts, dass das Objekt, nachdem es vom Greifer losgelassen wurde, selbsttätig aufgrund des Schwerkrafteinflusses seine Lage unmittelbar ändern, d.h. umkippt, und gegen die Anschlagstelle der Umorientierungsvorrichtung fällt und dort in einer zweiten Position aufgehalten wird. Die Instabilität der Ablegestelle muss sich somit nicht darauf beschränken, dass die Ablegestelle selbst instabil sein müsste. Vielmehr kann die instabile Ablegestelle, wie im Folgenden noch näher erläutert wird, ein statischer Punkt, eine statische Linie oder Kante, oder eine schräge Fläche an der Umorientierungsvorrichtung sein, an der das Objekt beim Loslassen durch den Greifer auftrifft und dort aufgrund des Schwerkrafteinflusses abkippt und sich aus ihrer ersten Orientierung in ihre geändert zweite Orientierung bewegt. Die Lage, welche das Objekt in der zweiten Orientierung dann einnimmt, wird von der Gestalt, Position und/oder Lage der Anschlagstelle der Umorientierungsvorrichtung bestimmt.

Gegebenenfalls kann die instabile Ablegestelle jedoch tatsächlich selbst instabil sein, und zwar in dem Sinne, dass die Ablegestelle beispielsweise durch eine schwenkbare Klappe gebildet wird, auf der das Objekt aufgestellt werden kann, wobei dann aufgrund des Schwerkrafteinflusses des Objekts auf die schwenkbare Klappe, die schwenkbare Klappe ihre Lage ändert und dabei auch das auf der Klappe aufgestellte Objekt mit umorientiert und in die zweite Orientierung bringt. Zwar ist eine solche Ablegestelle beweglich gelagert, aber es wird kein aktiver Antrieb für das Schwenken der Klappe benötigt.

Nachdem das Objekt an der Umorientierungsvorrichtung selbsttätig und nur aufgrund des Schwerkrafteinflusses aus seiner ersten Orientierung in seine zweite Orientierung an der Anschlagstelle umorientiert ist, kann anschließend das automatische Aufnehmen des Objektes aus seinem stabilen Lagezustand an der Anschlagstelle mittels des von dem Roboterarm geführten Greifers oder eines von einem anderen Roboterarm geführten anderen Greifer erfolgen, indem der Greifer das Objekt in einer von der ersten Greifpose verschiedenen zweiten Greifpose automatisch aufnimmt.

Das in der von der ersten Greifpose verschiedenen zweiten Greifpose automatisch vom Greifer aufgenommene Objekt kann dann beispielsweise an einem Zielort in der zweiten Greifpose abgelegt, montiert oder bearbeitet werden.

In einer Weiterbildung des Verfahrens sind optional die zusätzlichen Schritte vorgesehen:
- automatisches Erfassen des Objekts an der Umorientierungsvorrichtung in seiner zweiten Orientierung nach dem selbständigen Umorientieren des Objekts aus seiner instabilen Lage an der instabilen Ablegestelle in seine stabile Lage an der Anschlagstelle der Umorientierungsvorrichtung, und
- automatisches Auswerten der erfassten stabile Lage des Objekts an der Anschlagstelle der Umorientierungsvorrichtung und automatisches Bewegen des Greifers an das Objekt durch automatisches Verstellen der Gelenke des Roboterarms, welcher den Greifer führt, derart, dass auf Grundlage der erfassten und ausgewerteten stabilen Lage des Objekts an der Anschlagstelle der Umorientierungsvorrichtung der Greifer relativ zum Objekt eine Pose einnimmt, in welcher der Greifer das Objekt in der stabilen Lage an der Anschlagstelle der Umorientierungsvorrichtung automatisch in der zweiten Greifpose fassen kann.

Das Objekt kann in seiner zweiten Orientierung, d.h. in seiner stabilen Lage an der Anschlagstelle beispielsweise durch optische Sensoren, wie beispielsweise wenigstens einer Kamera erfasst werden. Der wenigstens eine optische Sensor bzw. die wenigstens eine Kamera kann von dem Roboterarm geführt sein, so dass der optische Sensor bzw. die Kamera ihre Blickrichtung ändern kann. Alternativ kann der wenigstens eine optische Sensor bzw. die wenigstens eine Kamera auch ortsfest installiert sein, beispielsweise unmittelbar oberhalb der Umorientierungsvorrichtung und/oder seitlich der Umorientierungsvorrichtung.

Die von dem wenigstens einen optischen Sensor oder der wenigstens einen Kamera erfassten Bilder können in Form von Bilddaten an eine Bildauswertungseinrichtung übermittelt werden, welche aus den Bilddaten die Position und/oder Lage des Objekts an der Umorientierungsvorrichtung bestimmt, insbesondere berechnet. Positions- und/oder Lagewerte des Objekts in seiner zweiten Orientierung können dann Eingangsgrößen für die Robotersteuerung bilden, welche den Roboterarm dann derart automatisch ansteuert, dass der vom Roboterarm geführte Greifer so relativ zum Objekt automatisch positioniert werden kann, dass der Greifer das Objekt in der zweiten Greifpose aufnehmen kann.

In einer speziellen Anwendung im Bereich des automatisierten Kommissionierens kann das Verfahren, durchgeführt im Rahmen eines automatisierten Kommissionierens von Stückgut aus einem Quellbehälter in einen Zielbehälter, die folgenden Schritte aufweisen:
- automatische Entnehmen eines Stückgut-Objekts aus einem Quellbehälter mittels des von dem Roboterarm geführten Greifers, indem der Greifer das Stückgut-Objekt in einer ersten Greifpose automatisch aus dem Quellbehälter aufnimmt,
- Vorgeben einer bestimmten Position und Orientierung, welche das entnommene Stückgut-Objekt in dem Zielbehälter einnehmen soll,
- Bestimmen, ob das entnommene Stückgut-Objekt in der ersten Greifpose des Greifers mittels des Roboterarms in der vorgegebenen Position und Orientierung für das Stückgut-Objekt automatisch in den Zielbehälter eingesetzt werden kann,
- im Falle, dass das entnommene Stückgut-Objekt in der ersten Greifpose des Greifers mittels des Roboterarms nicht in der vorgegebenen Position und Orientierung für das Stückgut-Objekt in den Zielbehälter eingesetzt werden kann, automatisches Absetzen des Stückgut-Objekts an der instabilen Ablegestelle der Umorientierungsvorrichtung.

In einer beispielhaften Art des Kommissionierens werden mehrere gleiche und/oder verschiedene Stückgut-Objekte aus unterschiedlichen Quellbehältern in einen Zielbehälter mittels eines Roboters automatisch hinein kommissioniert. Ein Roboter umfasst dabei einen Roboterarm und eine Robotersteuerung, welche ausgebildet und eingerichtet ist, die Antriebe der mehreren verstellbaren Gelenke des Roboterarms anzusteuern, um den Roboterarm in seiner jeweils momentanen Gelenkwinkelkonfiguration automatisch zu verstellen, d.h. zu bewegen. In speziellen Kommissionieranwendungen sollen dabei die Stückgut-Objekte automatisch in einer hohen Packungsdichte in den Zielbehälter eingelegt werden. Dazu ist es erforderlich, dass der Roboterarm mittels seines Greifers das in einer Greifpose gefasste Stückgut-Objekt so bewegt, dass es zur Erzielung der hohen Packungsdichte, in einer vorbestimmten Position und in einer vorbestimmten Orientierung in den Zielbehälter eingefügt wird.

Kann das Stückgut-Objekt in der ersten Greifpose mit der das Stückgut-Objekt durch den Greifer des Roboterarms automatisch aus einem Quellbehälter entnommen wurde, im Zielbehälter nicht in der zur Erzielung der hohen Packungsdichte erforderlichen Position und Orientierung eingesetzt werden, beispielsweise weil der Roboterarm wegen einer Gefahr der Kollision mit einer Seitenwand des Zielbehälters, die dazu notwendige Gelenkswinkelkonfiguration gar nicht einnehmen kann, so muss die Greifpose geändert werden. Dies kann mit dem erfindungsgemäßen Verfahren nun mit geringem technischem Aufwand und in zuverlässiger Weise automatisch erfolgen.

Ist das Stückgut-Objekt durch den Greifer in der ersten Greifpose aufgenommen und aus dem Quellbehälter entnommen, so kann beispielsweise mittels wenigstens eines optischen Sensors, wie beispielsweise wenigstens einer Kamera und auf Basis einer Bildauswertung die relative Position und Lage des Objekts bezüglich des Greifer automatisch erfasst werden.

Ein entsprechendes Programm, beispielsweise in der Robotersteuerung oder in einer der Robotersteuerung übergeordneten Planungssteuerung, kann nun bestimmen, ob das im Zielbehälter abzulegende Stückgut-Objekt in der zur Erzielung der hohen Packungsdichte erforderlichen Position und Orientierung in den Zielbehälter eingesetzt werden kann. Ist dies nicht der Fall, sieht das Verfahren vor, dass das Stückgut-Objekt an der instabilen Ablegestelle der Umorientierungsvorrichtung automatisch abgesetzt bzw. abgelegt wird. Gegebenenfalls kann das Stückgut-Objekt sogar in einer gewissen, insbesondere geringen Höhe über der instabilen Ablegestelle der Umorientierungsvorrichtung abgeworfen werden.

An der instabilen Ablegestelle wird das Stückgut-Objekt nun aufsetzen und das Stückgut-Objekt kann sich allein aufgrund der Schwerkraft selbsttätig umorientieren, d.h. umkippen und gegen die Anschlagstelle der Umorientierungsvorrichtung fallen. An der Anschlagstelle der Umorientierungsvorrichtung kommt dann das Stückgut-Objekt in seiner zweiten Orientierung zum Stehen. Von dort kann das Stückgut-Objekt dann mittels des Greifers des Roboterarms in einer von der ersten Greifpose verschiedenen zweiten Greifpose wieder aufgenommen und in den Zielbehälter transportiert werden, wo das Stückgut-Objekt aufgrund seiner geänderten Position und /oder Lage relativ zum Greifer, in der zweiten Greifpose in der zur Erzielung der hohen Packungsdichte erforderlichen Position und Orientierung in den Zielbehälter nun eingesetzt werden kann.

Demgemäß kann das Verfahren den weiteren Schritt aufweisen:
- automatisches Aufnehmen des Stückgut-Objektes aus seinem stabilen Lagezustand an der Anschlagstelle mittels des von dem Roboterarm geführten Greifers oder eines von einem anderen Roboterarm geführten anderen Greifer, indem der Greifer das Stückgut-Objekt in einer von der ersten Greifpose verschiedenen zweiten Greifpose automatisch aufnimmt, wobei die zweite Greifpose dadurch gekennzeichnet ist, dass das Stückgut-Objekt in der zweiten Greifpose des Greifers mittels des Roboterarms in der vorgegebenen Position und Orientierung für das Stückgut-Objekt automatisch in den Zielbehälter eingesetzt werden kann.

Die Aufgabe wird auch gelöst durch eine Umorientierungsvorrichtung, aufweisend eine instabile Ablegestelle, die ausgebildet ist zum Absetzen eines Objekts, das mittels eines von einem Roboterarm geführten Greifer aufgenommen ist, und aufweisend eine der instabilen Ablegestelle zugeordnete Anschlagstelle, die ausgebildet ist, das an der instabilen Ablegestelle durch den von dem Roboterarm geführten Greifer freigegebene und abgesetzte Objekt nach einem selbsttätigen Umorientieren aufgrund Schwerkrafteinflusses aus seiner instabilen ersten Orientierung in seine stabile zweite Orientierung, in der das Objekt an der Anschlagstelle anliegt, in seiner zweiten Orientierung in einem stabilen Lagezustand zu halten.

Die instabile Ablegestelle der Umorientierungsvorrichtung ist derart ausgebildet, dass ein Roboter, welcher den Greifer führt und mittels des Greifers das Objekt in der ersten Greifpose hält, die instabile Ablegestelle der Umorientierungsvorrichtung in einer Weise anfahren kann, dass das Objekt automatisch über die instabile Ablegestelle positioniert werden kann. Der Greifer lässt dann das Objekt automatisch los, so dass dieses Objekt nur mehr der instabilen Ablegestelle ausgesetzt ist, d.h. an der instabilen Ablegestelle instabil aufgesetzt ist oder in einer geringfügigen Distanz auf die instabile Ablegestelle auftrifft, so dass die instabile Ablegestelle in Zusammenwirken mit der Schwerkraft, die auf das Objekt einwirkt, bewirkt, dass das Objekt aus seiner momentanen ersten Orientierung in seine geänderte zweite Orientierung umkippt.

Das Umkippen wird durch die Anschlagstelle der Umorientierungsvorrichtung beendet, wenn das Objekt an der Anschlagstelle auftrifft. An der Anschlagstelle ist das Objekt dann in der zweiten Orientierung in einer stabilen Lage gehalten. Die Art, Größe, Gestalt und relative Position der Anschlagstelle zur instabilen Ablegestelle kann die Lage des Objekts in seiner zweiten Orientierung nach dem Kippen bestimmen.

Ist das Objekt an der Anschlagstelle in der zweiten Orientierung in einer stabilen Lage gehalten, so kann beispielsweise mittels wenigstens eines optischen Sensors, wie beispielsweise wenigstens einer Kamera und auf Basis einer Bildauswertung die relative Position und Lage des Objekts bezüglich der Umorientierungsvorrichtung automatisch erfasst werden.

Ein entsprechendes Programm, beispielsweise in der Robotersteuerung oder in einer der Robotersteuerung übergeordneten Planungssteuerung, kann nun bestimmen, dass das an der Umorientierungsvorrichtung in seiner zweiten Orientierung vorhandene Objekt automatisch durch den vom Roboterarm geführten Greifer in einer bestimmten zweiten Greifpose, die von der ersten Greifpose verschieden ist, wieder aufgenommen wird.

Die Umorientierungsvorrichtung kann demgemäß ausgebildet und eingerichtet sein, ein Verfahren nach einem beschriebenen Ausführungen durchzuführen.

Die instabile Ablegestelle kann von einem aus einer Grundfläche der Umorientierungsvorrichtung entgegen der Schwerkraftrichtung nach oben ragenden Vorsprung gebildet werden.

Der Vorsprung ist in Abhängigkeit der Art, Größe, Gestalt und sonstiger Beschaffenheiten der handzuhabenden Objekte, insbesondere der handzuhabenden Stückgut-Objekte derart zu gestalten, dass das Objekte oder das Stückgut-Objekt, wenn es auf dem Vorsprung positioniert wird, nur in einer instabilen Lage zu stehen bzw. zu liegen kommt und ein selbsttätiges Abkippen des Objekts bzw. des Stückgut-Objekts aufgrund Schwerkrafteinflusses stattfinden kann.

Der Vorsprung kann somit zumindest einen Punkt, eine Kante oder einen schrägen Flächenabschnitt aufweisen, an dem ein aufgesetztes Objekt abkippen kann.

Der Vorsprung kann insbesondere starr an der Grundfläche der Umorientierungsvorrichtung befestigt sein. In einer solchen Ausführungsform kann auf eine spezielle, insbesondere schwenkbare Lagerung der Ablegestelle verzichtet werden. Der Vorsprung kann demgemäß ortsfest und unbeweglich an der Umorientierungsvorrichtung angeordnet sein. So kann eine besonders zuverlässig arbeitende instabile Ablegestelle geschaffen werden.

Der Vorsprung kann als ein Stift, eine Kugel, ein Kegel oder eine Pyramide ausgebildet sein.

Der jeweilige Stift, die Kugel, der Kegel oder die Pyramide kann ausgehend von einer Grundfläche der Umorientierungsvorrichtung vertikal nach oben vorspringen.

Im Falle einer Pyramide kann diese wahlweise eine dreieckige, viereckige oder allgemein polygone Grundfläche aufweisen, welche in der Grundfläche der Umorientierungsvorrichtung liegt. Die Pyramide kann demgemäß eine Dreieckspyramide, eine quadratische Pyramide oder eine allgemeine Pyramide sein.

Durch die Anzahl und Lage der Seitenflächen der jeweiligen Pyramide können sich bevorzugte Kipprichtungen für das aufgesetzte Objekt ergeben. Die instabile Ablegestelle und die Anschlagstelle können derart aufeinander abgestimmt sein, dass beispielsweise im Falle einer Pyramide als Ablegestelle, die jeweilige Seitenfläche der Pyramide den maximalen Kippwinkel für das umzuorientierende Objekt vorgibt oder mitbestimmt.

Die Anschlagstelle kann von einer Kante oder einer Fläche gebildet werden, die in einem vorbestimmten festen Abstand von der instabilen Ablegestelle an der Umorientierungsvorrichtung angeordnet ist und in einer festgelegten Höhenlage oberhalb der instabilen Ablegestelle positioniert ist.

Die Anschlagstelle begrenzt insoweit den Kippwinkel für das auf der instabilen Ablegestelle abgesetzte Objekt. Die Anschlagstelle ist zumindest dort positioniert, wohin aufgrund der Ausgestaltung der instabile Ablegestelle das abgesetzte Objekt hin abkippt. Es können wahlweise eine einzige Anschlagstelle an der Umorientierungsvorrichtung vorgesehen sein oder es können mehrere Anschlagstellen an der Umorientierungsvorrichtung vorgesehen sein. Statt mehrerer Anschlagstellen, die sich um die instabile Ablegestelle herum verteilen, kann auch eine umlaufende Anschlagstelle vorgesehen sein, die sich um die instabile Ablegestelle herum erstreckt.

Die Anschlagstelle kann demgemäß eine ringförmige, insbesondere kreisringförmige oder ovale Gestalt aufweisen und derart angeordnet sein, dass sie, in einer horizontalen Ebene liegend, um die instabile Ablegestelle umläuft.

Eine um die instabile Ablegestelle umlaufende, ringförmige Anschlagstelle hat den Vorteil, dass das auf der instabilen Ablegestelle abgesetzte Objekt in eine beliebige Richtung hin umkippen kann und dennoch stets an der Anschlagstelle zu liegen kommt.

Die Umorientierungsvorrichtung kann in Art einer Schüssel ausgebildet sein, die eine konkave Grundfläche aufweist, an deren zentralen bodennahen Flächenbereich die instabile Ablegestelle ausgebildet ist und ein oberer umlaufender Schüsselrand die Anschlagstelle bildet.

Die Schüssel kann beispielsweise in Art einer nach oben hin offenen Kugelkalotte oder Kugelkappe ausgebildet sein. Die Schüssel kann insoweit in ihrer Grundform einem Kugelabschnitt einer Hohlkugel entsprechen. Der oberer umlaufender Schüsselrand bildet dabei die Anschlagstelle, welche ringförmig um die instabile Ablegestelle umläuft. Die instabile Ablegestelle, insbesondere der Vorsprung erstreckt sich ausgehend vom Zentrum der konkaven Grundfläche der Umorientierungsvorrichtung nach oben. Das obere Ende der instabilen Ablegestelle liegt dabei in einer tieferen Ebene als der umlaufende Schüsselrand.

Die Aufgabe wird außerdem gelöst durch ein Computerprogrammprodukt, aufweisend einen maschinenlesbaren Träger, auf dem Programmcode gespeichert ist, der von einer Robotersteuerung eines Roboters auslesbar ist und der die Robotersteuerung ausbildet und/oder einrichtet, ein Verfahren gemäß einer Ausführung oder mehreren Ausführungen, wie beschrieben, durchzuführen, wenn der Programmcode von der Robotersteuerung ausgeführt wird.

Das Computerprogrammprodukt kann beispielsweise eine CD, eine DVD oder ein USB-Stick sein. Das Computerprogrammprodukt kann aber auch eine Steuerungskarte sein, auf der Mikroprozessoren eingebunden sind. Das Computerprogrammprodukt kann jedoch auch in Form eines Downloads realisiert sein, der über das Internet oder ein anderes Netzwerk angeboten und verkauft werden kann.

Der maschinenlesbare Träger kann somit eine CD, eine DVD oder ein Mikroprozessor sein, auf dem der Programmcode gespeichert ist. Der maschinenlesbare Träger kann aber auch eine Festplatte oder ein SSD-Laufwerk sein, auf das der Programmcode heruntergeladen wurde, beispielsweise mittels eines Downloads, insbesondere in Form von Datenpaketen.

Der Programmcode kann durch ein editiertes Programm und/oder Daten repräsentiert sein, die auf dem maschinenlesbaren Träger gespeichert sind.

Durch ein Auslesen des editierten Programms und/oder der Daten wird die auslesende Robotersteuerung ausgebildet und/oder eingerichtet, das erfindungsgemäße Verfahren ausführen zu können, indem sie den Roboterarm ansteuert, um den Greifer zur Handhabung des Objekts entsprechend zu bewegen.

In allen Ausführungsformen kann der Greifer beispielsweise als ein Sauggreifer ausgebildet sein. Der Sauggreifer kann ein Saugelement oder mehrere Saugelemente aufweisen, welche das aufzunehmende Objekt an einer seiner Oberflächen zum Halten ansaugen kann.

Alternativ zu einem Sauggreifer kann der Greifer aber beispielsweise auch als ein Backengreifer ausgebildet sein, der zum Öffnen und Schließen des Greifers wenigstens zwei gegeneinander verstellbare Greiferbacken aufweisen kann, welche das Objekt in einem klemmenden Griff festhalten können.

Das nach dem erfindungsgemäßen Verfahren handzuhabende Objekt kann vorzugsweise, aber nicht ausschließlich, von einem eher länglichen und/oder schmalen Gegenstand gebildet werden.

Das erfindungsgemäße Verfahren wird durchgeführt, wenn die Robotersteuerung den Programmcode, d.h. das editierte Programm tatsächlich entsprechend ausführt und/oder die Daten tatsächlich entsprechend verarbeitet.

Konkrete Ausführungsbeispiele der Erfindung sind in der nachfolgenden Beschreibung unter Bezugnahme auf die beigefügten Figuren näher erläutert. Konkrete Merkmale dieser exemplarischen Ausführungsbeispiele können unabhängig davon, in welchem konkreten Zusammenhang sie erwähnt sind, gegebenenfalls auch einzeln oder in weiteren Kombinationen betrachtet, allgemeine Merkmale der Erfindung darstellen.

Es zeigen:
- Fig. 1: ein Flussdiagramm der Schritte in dem grundlegenden erfindungsgemäßen Verfahren,
- Fig. 2: einen beispielhaften Roboter, umfassend einen Roboterarm mit mehreren Gliedern und mehreren Gelenken, und umfassend eine Robotersteuerung zum Ansteuern des Roboterarms, sowie einem beispielhaften Quellbehälter und einem beispielhaften Zielbehälter an einem Kommissionier-Arbeitsplatz,
- Fig. 3: eine schematische perspektivische Darstellung einer beispielhaften erfin-dungsgemäßen Umorientierungsvorrichtung in Art einer Schüssel mit einer Pyramide als instabile Ablegestelle und einem Schüsselrand als Anschlagstelle,
- Fig. 4: eine schematische perspektivische Darstellung der Umorientierungsvorrichtung gemäß Fig. 3 mit einem beispielhaften zylindrischen Objekt, das von einem Sauggreifer in seiner ersten Orientierung oberhalb der instabilen Ablegestelle vor einem Loslassen durch den Greifer positioniert ist,
- Fig. 5: eine schematische perspektivische Darstellung der Umorientierungsvorrichtung gemäß Fig. 3 mit dem zylindrischen Objekt in seiner durch Schwerkrafteinfluss umorientierten, d.h. gekippten zweiten Orientierung nach einem Loslassen des Objekts durch den Greifer, und
- Fig. 6: eine schematische perspektivische Darstellung der Umorientierungsvorrichtung gemäß Fig. 3 mit dem gekippten zylindrischen Objekt in der zweiten Orientierung und dem beispielshaften Sauggreifer in einer umorientierten zweiten Greifpose.

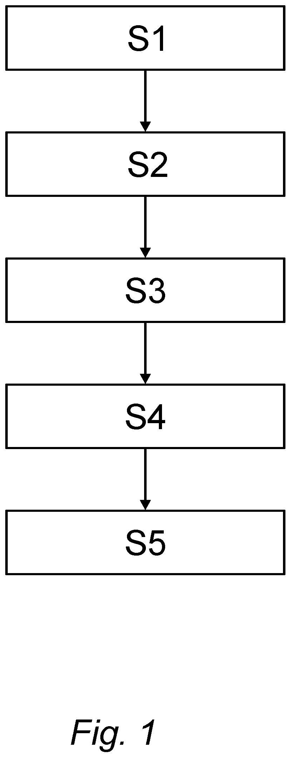

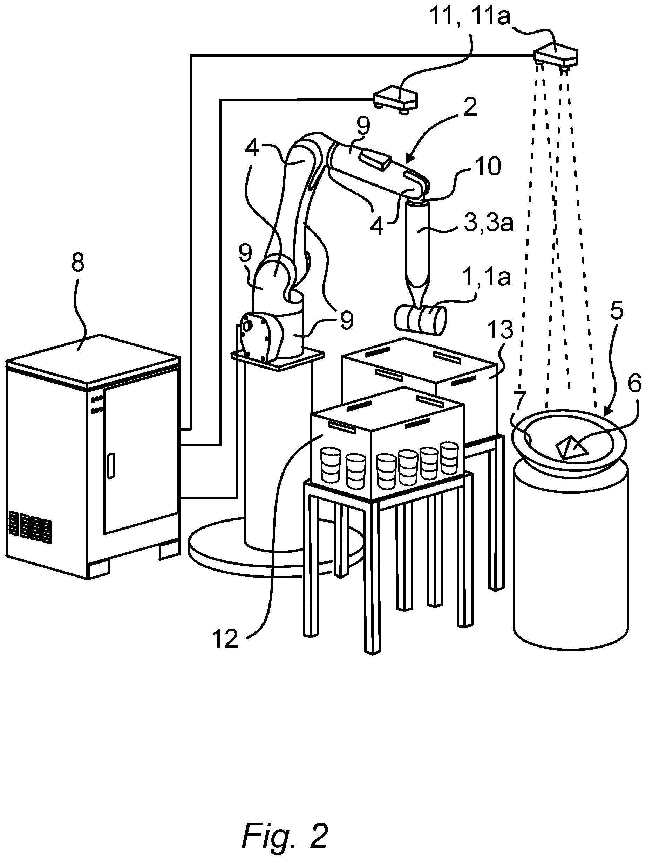

In der Fig. 1 ist das grundlegende erfindungsgemäße Verfahren zum Umorientieren eines von einem Roboterarm mittels eines Greifers handzuhabenden Objekts, in einem Flussdiagramm der Schritte dargestellt. Die in Fig. 1 nicht aufgezeigten Bezugszeichen sind aus Fig. 2 zu entnehmen.

In einem ersten Schritt S1 des Verfahren erfolgt ein automatisches Aufnehmen eines Objektes 1 mittels eines von einem Roboterarm 2 geführten Greifers 3, indem der Greifer 3 das Objekt 1 in einer ersten Greifpose automatisch aufnimmt.

In einem zweiten Schritt S2 des Verfahren erfolgt ein automatisches Bewegen des Objektes 1 durch automatisches Verstellen von Gelenken 4 des Roboterarms 2, welcher den Greifer 3 führt, an eine Umorientierungsvorrichtung 5, welche eine instabile Ablegestelle 6 aufweist, an der das Objekt 1 in einem instabilen Lagezustand abgesetzt werden kann.

In einem dritten Schritt S3 des Verfahren erfolgt ein Absetzen des Objektes 1 an der instabilen Ablegestelle 6 der Umorientierungsvorrichtung 5 durch automatisches Freigeben des vom Roboterarm 2 geführten Objekts 1 von dem Greifer 3.

In einem vierten Schritt S4 des Verfahren erfolgt ein selbsttätiges Umorientieren des an der instabilen Ablegestelle 6 der Umorientierungsvorrichtung 5 abgesetzten Objekts 1, indem das vom Greifer 3 freigegebene Objekt 1 aufgrund Schwerkrafteinflusses seine momentane erste Orientierung an der instabilen Ablegestelle 6 selbsttätig ändert, bis das Objekt 1 an einer Anschlagstelle 7 der Umorientierungsvorrichtung 5 anstößt und dort einen stabilen Lagezustand einnimmt, in dem sich das Objekt 1 in einer von der ersten Orientierung verschiedenen zweiten Orientierung befindet.

In einem fünften Schritt S5 des Verfahren erfolgt ein automatisches Aufnehmen des Objektes 1 aus seinem stabilen Lagezustand an der Anschlagstelle 7 mittels des von dem Roboterarm 2 geführten Greifers 3 oder eines von einem anderen Roboterarm geführten anderen Greifer, indem der Greifer 3 das Objekt 1 in einer von der ersten Greifpose verschiedenen zweiten Greifpose automatisch aufnimmt.

Die Fig. 2 zeigt beispielhaft einen Kommissionierarbeitsplatz mit einem Roboter, der den Roboterarm 2 und eine Robotersteuerung 8 umfasst.

Der Roboterarm 2 umfasst im Falle des vorliegenden Ausführungsbeispiels mehrere, nacheinander angeordnete, und mittels Gelenke 4 drehbar miteinander verbundene Glieder 9.

Die Robotersteuerung 8 ist ausgebildet, ein Roboterprogramm auszuführen und die Glieder 9 und Gelenke 4 des Roboterarms 2 automatisch zu bewegen. Eines der mehreren Glieder 9 bildet ein Endglied des Roboterarms 2, das einen Werkzeugflansch 10 aufweist, an dem der Greifer 3 befestigt ist. Im Falle des vorliegenden Ausführungsbeispiels ist der Greifer 3 als ein Sauggreifer 3a ausgebildet.

Bei dem Verfahren kann ein automatisches Erfassen des Objekts 1 an der Umorientierungsvorrichtung 5 in seiner zweiten Orientierung nach dem selbständigen Umorientieren des Objekts 1 aus seiner instabilen Lage an der instabilen Ablegestelle 6 in seine stabile Lage an der Anschlagstelle 7 der Umorientierungsvorrichtung 5 erfolgen.

Das automatische Erfassen kann beispielsweise durch einen optischen Sensor 11, wie beispielsweise wenigstens einer Kamera 11a erfolgen.

Anschließend kann ein automatisches Auswerten der erfassten stabile Lage des Objekts 1 an der Anschlagstelle 7 der Umorientierungsvorrichtung 5 und ein automatisches Bewegen des Greifers 3 an das Objekt 1 erfolgen, durch automatisches Verstellen der Gelenke 4 des Roboterarms 2, welcher den Greifer 3 führt, derart, dass auf Grundlage der erfassten und ausgewerteten stabilen Lage des Objekts 1 an der Anschlagstelle 7 der Umorientierungsvorrichtung 5 der Greifer 3 relativ zum Objekt 1 eine Pose einnimmt, in welcher der Greifer 3 das Objekt 1 in der stabilen Lage an der Anschlagstelle 7 der Umorientierungsvorrichtung 5 automatisch in der zweiten Greifpose fassen kann.

In Fig. 2 ist ein Kommissionier-Arbeitsplatz dargestellt, mit einem beispielhaften Roboter, umfassend den Roboterarm 2 mit mehreren Gliedern 9 und mehreren Gelenken 4, und umfassend die Robotersteuerung 8 zum Ansteuern des Roboterarms 2, sowie einem beispielhaften Quellbehälter 12 und einem beispielhaften Zielbehälter 13, sowie einer beispielhaften Umorientierungsvorrichtung 5.

Bei diesem Verfahren, durchgeführt im Rahmen eines automatisierten Kommissionierens von Stückgut 1 aus einem Quellbehälter 12 in einen Zielbehälter 13, kann ein automatisches Entnehmen eines Stückgut-Objekts 1a aus einem Quellbehälter 12 mittels des von dem Roboterarm 2 geführten Greifers 3 erfolgen, indem der Greifer 3 das Stückgut-Objekt 1a in einer ersten Greifpose automatisch aus dem Quellbehälter 12 aufnimmt.

Für den Zielbehälter 13 wird nun eine bestimmte Position und Orientierung vorgegeben, welche das entnommene Stückgut-Objekt 1a in dem Zielbehälter 13 einnehmen soll. Im vorliegenden Ausführungsbeispiel wird ein senkrecht stehender Zylinder aus dem Quellbehälter 12 entnommen und soll, wie in Fig. 2 dargestellt, in einer liegenden Orientierung in den Zielbehälter 13 eingesetzt werden.

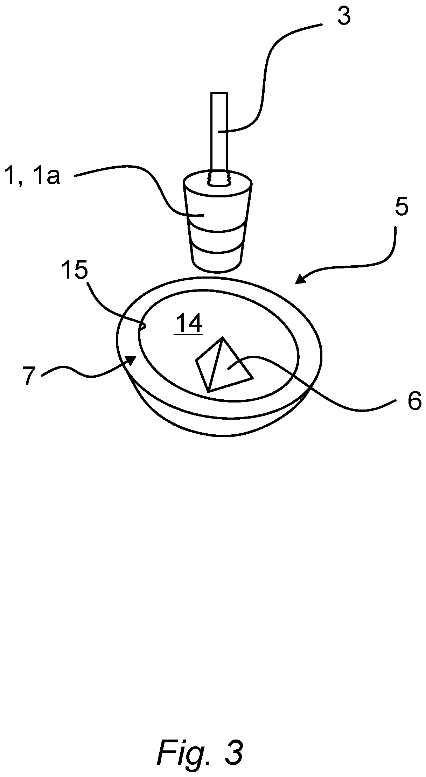

Bei diesem Verfahren erfolgt ein Bestimmen, ob das entnommene Stückgut-Objekt 1a in der ersten Greifpose (Fig. 3) des Greifers 3 mittels des Roboterarms 2 in der vorgegebenen Position und Orientierung (liegend) für das Stückgut-Objekt 1a automatisch in den Zielbehälter 13 eingesetzt werden kann.

Im vorliegenden Falle kann das in vertikaler Orientierung entnommene Stückgut-Objekt 1a in der ersten Greifpose (Fig. 3) des Greifers 3 mittels des Roboterarms 2 nicht in der vorgegebenen Position und Orientierung (liegend) für das Stückgut-Objekt 1a in den Zielbehälter 12 eingesetzt werden kann. Der Greifer 3 ist im vorliegenden Ausführungsbeispiel als ein punktuell wirkender Sauggreifer 3a ausgebildet.

Daher erfolgt gemäß dem Verfahren zusätzlich ein automatisches Absetzen des Stückgut-Objekts 1a an der instabilen Ablegestelle 6 der Umorientierungsvorrichtung 5.

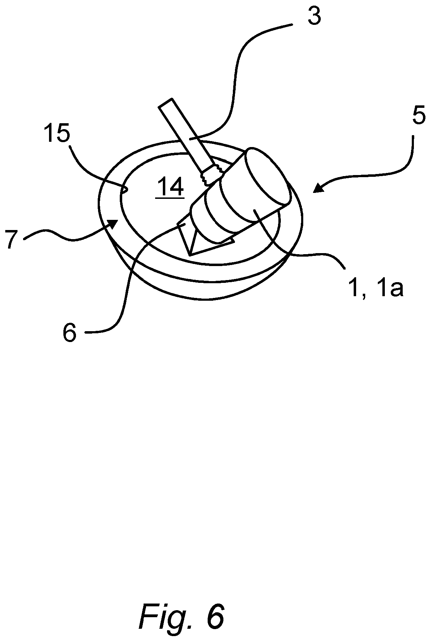

Nach einem selbsttätigen Umkippen des Stückgut-Objekts 1a aufgrund des Schwerkrafteinflusses erfolgt dann ein erneutes automatisches Aufnehmen des Stückgut-Objektes 1a aus seinem stabilen Lagezustand an der Anschlagstelle 7 mittels des von dem Roboterarm 2 geführten Greifers 3, indem der Greifer 3 das Stückgut-Objekt 1a in einer von der ersten Greifpose (Fig. 3) verschiedenen zweiten Greifpose (Fig. 6) automatisch aufnimmt, wobei die zweite Greifpose dadurch gekennzeichnet ist, dass das Stückgut-Objekt 1a in der zweiten Greifpose des Greifers 3 mittels des Roboterarms 2 in der vorgegebenen Position und Orientierung (liegend) für das Stückgut-Objekt 1a automatisch in den Zielbehälter 13 eingesetzt werden kann.

Die Umorientierungsvorrichtung 5 ist im Detail in Fig. 3 bis Fig. 6 näher gezeigt.

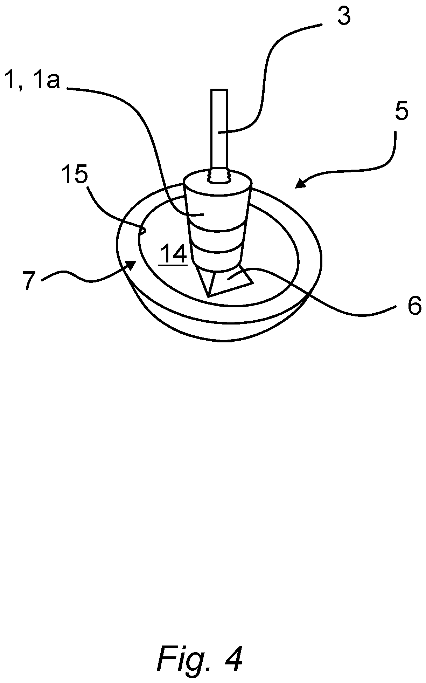

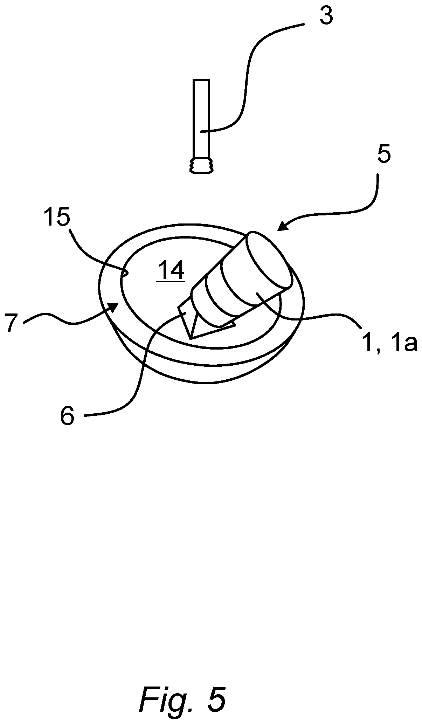

Die Umorientierungsvorrichtung 5 weist eine instabile Ablegestelle 6 auf, die ausgebildet ist zum Absetzen eines Objekts 1, das mittels eines von einem Roboterarm 2 geführten Greifer 3 aufgenommen ist, und weist eine der instabilen Ablegestelle 6 zugeordnete Anschlagstelle 7 auf, die ausgebildet ist, das an der instabilen Ablegestelle 6 durch den von dem Roboterarm 2 geführten Greifer 3 freigegebene und abgesetzte Objekt 1 nach einem selbsttätigen Umorientieren aufgrund Schwerkrafteinflusses aus seiner instabilen ersten Orientierung (Fig. 4) in seine stabile zweite Orientierung (Fig. 5), in der das Objekt 1 an der Anschlagstelle 7 anliegt, in seiner zweiten Orientierung in einem stabilen Lagezustand zu halten.

Die instabile Ablegestelle 7 wird im Falle des vorliegenden Ausführungsbeispiels von einem aus einer Grundfläche 14 der Umorientierungsvorrichtung 5 entgegen der Schwerkraftrichtung nach oben ragenden Vorsprung gebildet. Der Vorsprung ist im Falle des vorliegenden Ausführungsbeispiels starr an der Grundfläche 14 der Umorientierungsvorrichtung 5 befestigt.

Im Falle des vorliegenden Ausführungsbeispiels ist der Vorsprung als eine Pyramide mit quadratischer Grundfläche und vier Seitenwänden ausgebildet.

Die Anschlagstelle 7 wird im Falle des vorliegenden Ausführungsbeispiels von einer Kante 15 gebildet wird, die in einem vorbestimmten festen Abstand von der instabilen Ablegestelle 6 an der Umorientierungsvorrichtung 5 angeordnet ist und in einer Höhenlage oberhalb der instabilen Ablegestelle 6 positioniert ist.

Die Anschlagstelle 7 bzw. die Kante 15 weist eine ringförmige Gestalt auf und ist derart angeordnet, dass sie in einer horizontalen Ebene liegend um die instabile Ablegestelle 6 umläuft.

Die Umorientierungsvorrichtung 5 ist dabei beispielsweise in Art einer Schüssel ausgebildet, die eine konkave Grundfläche 14 aufweist, an deren zentralen bodennahen Flächenbereich die instabile Ablegestelle 6 ausgebildet ist und der oberer umlaufender Schüsselrand, d.h. die Kante 15 die Anschlagstelle 7 bildet.

## Patentansprüche

1. Verfahren zum Umorientieren eines von einem Roboterarm (2) mittels eines Greifers (3) handzuhabenden Objekts (1), aufweisend die Schritte:
- automatisches Aufnehmen eines Objektes (1) mittels eines von einem Roboterarm (2) geführten Greifers (3), indem der Greifer (3) das Objekt (1) in einer ersten Greifpose automatisch aufnimmt,
- automatisches Bewegen des Objektes (1) durch automatisches Verstellen von Gelenken (4) des Roboterarms (2), welcher den Greifer (3) führt, an eine Umorientierungsvorrichtung (5), welche eine instabile Ablegestelle (6) aufweist, an der das Objekt (1) in einem instabilen Lagezustand abgesetzt werden kann,
- Absetzen des Objektes (1) an der instabilen Ablegestelle (6) der Umorientierungsvorrichtung (5) durch automatisches Freigeben des vom Roboterarm (2) geführten Objekts (1) von dem Greifer (3),
- selbsttätiges Umorientieren des an der instabilen Ablegestelle (6) der Umorientierungsvorrichtung (5) abgesetzten Objekts (1), indem das vom Greifer (3) freigegebene Objekt (1) aufgrund Schwerkrafteinflusses seine momentane erste Orientierung an der instabilen Ablegestelle (6) selbsttätig ändert, bis das Objekt (1) an einer Anschlagstelle (7) der Umorientierungsvorrichtung (5) anstößt und dort einen stabilen Lagezustand einnimmt, in dem sich das Objekt (1) in einer von der ersten Orientierung verschiedenen zweiten Orientierung befindet,
- automatisches Aufnehmen des Objektes (1) aus seinem stabilen Lagezustand an der Anschlagstelle (7) mittels des von dem Roboterarm (2) geführten Greifers (3) oder eines von einem anderen Roboterarm geführten anderen Greifer, indem der Greifer (3) das Objekt (1) in einer von der ersten Greifpose verschiedenen zweiten Greifpose automatisch aufnimmt.

2. Verfahren nach Anspruch 1, **gekennzeichnet durch** die zusätzlichen Schritte:
- automatisches Erfassen des Objekts (1) an der Umorientierungsvorrichtung (5) in seiner zweiten Orientierung nach dem selbständigen Umorientieren des Objekts (1) aus seiner instabilen Lage an der instabilen Ablegestelle (6) in seine stabile Lage an der Anschlagstelle (7) der Umorientierungsvorrichtung (5), und
- automatisches Auswerten der erfassten stabile Lage des Objekts (1) an der Anschlagstelle (7) der Umorientierungsvorrichtung (5) und automatisches Bewegen des Greifers (3) an das Objekt (1) **durch** automatisches Verstellen der Gelenke (4) des Roboterarms (1), welcher den Greifer (3) führt, derart, dass auf Grundlage der erfassten und ausgewerteten stabilen Lage des Objekts (1) an der Anschlagstelle (7) der Umorientierungsvorrichtung (5) der Greifer (3) relativ zum Objekt (1) eine Pose einnimmt, in welcher der Greifer (3) das Objekt (1) in der stabilen Lage an der Anschlagstelle (7) der Umorientierungsvorrichtung (5) automatisch in der zweiten Greifpose fassen kann.

3. Verfahren nach Anspruch 1 oder 2, durchgeführt im Rahmen eines automatisierten Kommissionierens von Stückgut aus einem Quellbehälter (12) in einen Zielbehälter (13), **gekennzeichnet durch** die Schritte:
- automatische Entnehmen eines Stückgut-Objekts (1a) aus einem Quellbehälter (12) mittels des von dem Roboterarm (2) geführten Greifers (3), indem der Greifer (3) das Stückgut-Objekt (1a) in einer ersten Greifpose automatisch aus dem Quellbehälter (12) aufnimmt,
- Vorgeben einer bestimmten Position und Orientierung, welche das entnommene Stückgut-Objekt (1a) in dem Zielbehälter (13) einnehmen soll,
- Bestimmen, ob das entnommene Stückgut-Objekt (1a) in der ersten Greifpose des Greifers (3) mittels des Roboterarms (2) in der vorgegebenen Position und Orientierung für das Stückgut-Objekt (1a) automatisch in den Zielbehälter (13) eingesetzt werden kann,
- im Falle, dass das entnommene Stückgut-Objekt (1a) in der ersten Greifpose des Greifers (3) mittels des Roboterarms (2) nicht in der vorgegebenen Position und Orientierung für das Stückgut-Objekt (1a) in den Zielbehälter (13) eingesetzt werden kann, automatisches Absetzen des Stückgut-Objekts (1a) an der instabilen Ablegestelle (6) der Umorientierungsvorrichtung (5) .

4. Verfahren nach Anspruch 3, **gekennzeichnet durch** den weiteren Schritt:
- automatisches Aufnehmen des Stückgut-Objektes (1a) aus seinem stabilen Lagezustand an der Anschlagstelle (7) mittels des von dem Roboterarm (2) geführten Greifers (3) oder eines von einem anderen Roboterarm geführten anderen Greifer, indem der Greifer (3) das Stückgut-Objekt (1a) in einer von der ersten Greifpose verschiedenen zweiten Greifpose automatisch aufnimmt, wobei die zweite Greifpose **dadurch** gekennzeichnet ist, dass das Stückgut-Objekt (1a) in der zweiten Greifpose des Greifers (3) mittels des Roboterarms (2) in der vorgegebenen Position und Orientierung für das Stückgut-Objekt (1a) automatisch in den Zielbehälter (13) eingesetzt werden kann.

5. Umorientierungsvorrichtung, aufweisend eine instabile Ablegestelle (6), die ausgebildet ist zum Absetzen eines Objekts (1), das mittels eines von einem Roboterarm (2) geführten Greifer (3) aufgenommen ist, und aufweisend eine der instabilen Ablegestelle (6) zugeordnete Anschlagstelle (7), die ausgebildet ist, das an der instabilen Ablegestelle (6) durch den von dem Roboterarm (2) geführten Greifer (3) freigegebene und abgesetzte Objekt (1) nach einem selbsttätigen Umorientieren aufgrund Schwerkrafteinflusses aus seiner instabilen ersten Orientierung in seine stabile zweite Orientierung, in der das Objekt (1) an der Anschlagstelle (7) anliegt, in seiner zweiten Orientierung in einem stabilen Lagezustand zu halten.

6. Umorientierungsvorrichtung nach Anspruch 5, die ausgebildet und eingerichtet ist ein Verfahren nach einem der Ansprüche 1 bis 4 durchzuführen.

7. Umorientierungsvorrichtung nach Anspruch 5 oder 6, **dadurch gekennzeichnet, dass** die instabile Ablegestelle (6) von einem aus einer Grundfläche (14) der Umorientierungsvorrichtung (5) entgegen der Schwerkraftrichtung nach oben ragenden Vorsprung gebildet wird.

8. Umorientierungsvorrichtung nach Anspruch 7, **dadurch gekennzeichnet, dass** der Vorsprung starr an der Grundfläche (14) der Umorientierungsvorrichtung (5) befestigt ist.

9. Umorientierungsvorrichtung nach Anspruch 7 oder 8, **dadurch gekennzeichnet, dass** der Vorsprung als ein Stift, eine Kugel, ein Kegel oder eine Pyramide ausgebildet ist.

10. Umorientierungsvorrichtung nach einem der Ansprüche 5 bis 9, **dadurch gekennzeichnet, dass** die Anschlagstelle (7) von einer Kante oder einer Fläche gebildet wird, die in einem vorbestimmten festen Abstand von der instabilen Ablegestelle (6) an der Umorientierungsvorrichtung (5) angeordnet ist und in einer Höhenlage oberhalb der instabilen Ablegestelle (6) positioniert ist.

11. Umorientierungsvorrichtung nach Anspruch 10, **dadurch gekennzeichnet, dass** die Anschlagstelle (7) eine ringförmige Gestalt aufweist und derart angeordnet ist, dass sie in einer horizontalen Ebene liegend um die instabile Ablegestelle (6) umläuft.

12. Umorientierungsvorrichtung nach einem der Ansprüche 5 bis 11, **dadurch gekennzeichnet, dass** die Umorientierungsvorrichtung (5) in Art einer Schüssel ausgebildet ist, die eine konkave Grundfläche (14) aufweist, an deren zentralen bodennahen Flächenbereich die instabile Ablegestelle (6) ausgebildet ist und ein oberer umlaufender Schüsselrand die Anschlagstelle (7) bildet.

13. Computerprogrammprodukt, aufweisend einen maschinenlesbaren Träger, auf dem Programmcode gespeichert ist, der von einer Robotersteuerung (8) eines Roboters auslesbar ist und der die Robotersteuerung (8) ausbildet und/oder einrichtet, ein Verfahren nach einem der Ansprüche 1 bis 4 durchzuführen, wenn der Programmcode von der Robotersteuerung (8) ausgeführt wird.
